# EUROPEAN PATENT APPLICATION

(11) **EP 4 715 526 A1**
(43) Date of publication of application: **25.03.2026**
(21) Application number: 24201505.5
(22) Date of filing: 19.09.2024
(51) Int. Cl.: G06F 3/01, G06F 3/038, G06F 3/16, H04M 1/27

(54) **COMPUTER INTERACTION WITH TOUCHLESS GESTURE INPUT AND VOICE INPUT**

(71) Applicant: AMERIA AG, 69124 Heidelberg (DE)
(72) Inventor: METTER, Albrecht, 69120 Heidelberg (DE)
(74) Representative: Best, Bastian

(57) **Abstract**

A touchless gesture interaction method for controlling a computer device is provided. The method may comprise displaying one or more content items on a display means. The method may comprise detecting, using a touchless gesture input system, a touchless pointing gesture of a user which indicates a selected content item of the displayed one or more content items. The method may comprise, in response to the detecting, activating a voice input system. The method may comprise receiving, using the voice input system, a voice input. The method may comprise associating the received voice input with the selected content item.

## Description

### TECHNICAL FIELD

The present disclosure generally relates to the field of human-machine interface design in computer devices, and more particularly to techniques for improving interaction with a computer device. Certain embodiments may provide for a new interaction paradigm for interacting with computer devices.

### BACKGROUND

Computer devices have become an essential part of our daily lives. One type of computing device includes portable computers also known as laptops or notebooks which provide the user with a convenient way to work, communicate, and entertain themselves on the go. Portable computers typically include a display and keyboard that are directly connected to the main case, all sharing a single power source.

Despite evolutionary developments of their design (e.g., form factor, materials) and technical features (e.g., battery life, performance), portable computers have remained essentially the same over a long time. For example, the human-machine interface of typical portable computers, which consists mainly of a keyboard and a pointing device such as a trackpad or trackpoint, have remained practically unchanged for decades. As a result, the ways how users interact with portable computers have remained relatively static, and so are the use cases in which these devices are employed nowadays.

A significant limitation of traditional human-machine interfaces, especially but not only in portable computers, is their largely typing-based approach and their reliance on physical input devices like the keyboard and trackpad. As a result, these computers are typically following the old paradigm of thinking about personal computing like using a typewriter where the computer is a tool that the user interacts with primarily by typing text, in addition to moving a mouse pointer. They fall short of providing new user interface paradigms that are ready for future mega trends and emerging use cases such as, without limitation, 3D content creation and consumption, virtual reality, the Metaverse, speech-to-text, artificial intelligence, chat bots, and gaming.

It is therefore an objective of the present disclosure to provide techniques for an improved human-machine interface for computer devices, thereby overcoming the above-mentioned disadvantages of the prior art at least in part.

### SUMMARY OF THE DISCLOSURE

The objective is solved by the subject-matter defined in the independent claims. Advantageous modifications of embodiments of the present disclosure are defined in the dependent claims as well as in the description and the figures.

According to a first aspect of the present invention, it may be provided a touchless gesture interaction method for controlling a computer device. The method may be computer-implemented. The method may comprise displaying one or more content items on a display means. The method may comprise detecting, using a touchless gesture input system, a touchless pointing gesture of a user which indicates a selected content item of the displayed one or more content items. The method may comprise, in response to the detecting, activating a voice input system. The method may comprise receiving, using the voice input system, a voice input. The method may comprise associating the received voice input with the selected content item.

One technical advantage of the method may be that it allows for a more intuitive and natural way of interacting with a computer device, as users can use gestures and voice commands instead of traditional input methods like keyboards and mice or touchpads. Further, the method may reduce the need for physical contact with the device, which may be beneficial in environments where hygiene is a concern, such as hospitals or public kiosks. Further, the method may increase accessibility for users with physical disabilities who may have difficulty using traditional input devices.

Moreover, the method may allow for faster and more efficient interactions, as users can quickly point to and select items and provide voice commands without navigating through menus. Thus, the user experience is enhanced by providing a seamless and integrated way of controlling the computer device, as the combination of touchless gestures and voice inputs may offer a more engaging and interactive interface.

Throughout the present disclosure, the term "computer-implemented method" may refer to a method executed by a computer device or system, typically involving software instructions. Throughout the present disclosure, the term "computer device" may refer to any electronic device capable of processing data and executing instructions. Computer devices may come in many forms, including desktop computers, laptops, tablets, and smartphones. Also, other types of devices such as television sets, in particular so-called smart TVs, set-top-boxes and gaming devices, also referred to as gaming consoles, are examples of computer devices. Furthermore, any type of other physical apparatus with at least some computing functionality may be referred to as a computer device, such as without limitation a computer device which is built into another higher-level electronic device such as a Virtual Reality device, a car, a vehicle and/or the like. Generally speaking, a computer device typically includes at least one central processing unit (CPU), at least one memory component, one or more input/output devices, and possibly various other components.

Said at least one central processing unit (CPU), at least one memory component and one or more input/output devices may function as follows: The CPU may be the central processing unit of the computer device and may be responsible for performing all the instructions and calculations that the device needs to execute. It may be essentially the "brain" of the computer device, and it may interpret and execute commands/instructions provided to it by a user or a device's software. The memory component of a computer device may be responsible for storing data and instructions that are required for the device's operation. This memory may be divided into two categories: temporary and permanent. Temporary memory may be used to store data that is needed only for a short period, while permanent memory may be used for long-term storage. Input/output devices may be used to interact with the computer device. Common input devices include mouses, trackpads, trackpoints, keyboards, touchbars and touchscreens, while common output devices include monitors, speakers, and printers. These devices allow the user to input data and commands into the device and receive output from the device. Various other components may be included in a computer device, such as graphics processing units, network interface cards, and storage devices like hard drives and solid-state drives. These components help to expand the capabilities of the device and allow it to perform more complex tasks. In summary, a computer device is an electronic device that is specifically designed to execute various computing tasks. It comprises components that are necessary for its operation.

Throughout the present disclosure, the term "touchless gesture interaction" may refer to user interactions with a computer device that do not require physical contact with the device, typically involving gestures detected by the touchless gesture input system which may include, for this purpose, sensor means, in particular cameras. Thus, throughout the present disclosure, the term "touchless gesture input system" may be used as a synonym for the term "touchless interaction system". This may include systems that detect and interpret user gestures without requiring physical contact, using technologies such as infrared sensors, cameras, and/or ultrasonic sensors.

Touchless interaction may be facilitated through the use of sensor means that detect and interpret user movements and gestures. The sensor means may capture data related to the user's physical actions, which is then processed to generate corresponding virtual actions.

Thus, the touchless interaction system, i.e., touchless user input system may refer to a hardware and software combination that enables an electronic device to recognize and interpret physical gestures carried out by a user without direct touch. This system may include, for example, cameras, infrared sensors, and other types of motion detection sensors that are capable of detecting the movement of a user's body part in free space.

For that, the touchless interaction system preferably includes or consists of sensor means. The sensor means may include one or more sensor devices. Groups of the one or more sensor devices may build a sensor array. An exemplary sensor means may comprise at least two sensor arrays, each sensor array including at least two sensor devices. The sensor devices may be devices capable of capturing sensor data, e.g., imaging data, but may also refer to supporting devices which support other sensor devices in enhancing the precision of capturing sensor data, e.g., an infrared projector. For example, one sensor array may include two infrared cameras and one infrared laser projector, thus the sensor array comprising three sensor devices in total. Further, it may be included a 2D RGB camera for adding color information to the sensor data. It may be provided that 3D image data obtained by 3D camera(s) are combined by 2D RGB image data obtained by a 2D RGB camera.

The sensor means may in particular be 3D imaging sensor means which may include sensor devices that are, alone or in combination with other sensor devices, capable of capturing three-dimensional images of an environment, in particular of objects such as a user's hand being the physical input object. There are several different types of 3D imaging sensor means, including time-of-flight (TOF) sensors, structured light sensors, and stereo vision sensors. TOF sensors work by emitting a light pulse and measuring the time it takes for the light to bounce back from an object, enabling them to create a three-dimensional map of the object's shape and distance. One example for said TOF sensors is a LiDAR sensor. Structured light sensors use a pattern of light and shadow, e.g., a projected pattern projected by a laser projector, and at least one camera to create a three-dimensional map of an object. Stereo vision sensors use at least two cameras to create a three-dimensional image by comparing the images captured by each camera. The cameras may for example be infrared cameras. The projector may for example be an infrared laser projector. Preferably, a projector is configured to emit light having a wavelength which is outside the human visible areas of wavelengths, thus not disturbing the user. Using a projector projecting a pattern generally increases the accuracy of captured sensor data.

The touchless interaction system may be configured to observe an interaction space comprising or being a 3D space in the nearfield of the electronic device in which the user may provide interaction input, i.e., free-space hand movement. The space may be a space between the user and the electronic device, in particular the display means. Generally, the interaction space may be within or equal to the field of view of the sensor means. The interaction space may have a spatial orientation and/or location that is particularly convenient for the user person for providing touchless interaction, i.e., free-space hand movements. It may be provided that the user is provided with a control option to adjust the spatial orientation and/or location of the interaction space.

The touchless interaction system may receive, in particular from sensor means, sensor data, i.e., data collected by sensor means. The sensor means may preferably include at least one imaging sensor device, as mentioned above, thus in this case, the sensor data includes image data. In a preferred embodiment, the sensor means is configured to capture a 3D image of an interaction space. The 3D image may be generated based on layering various sensor data from different sensor devices. In particular, the sensor means may include a depth sensor, such as at least one infrared sensor, facilitating creation of the 3D image. Said captured sensor data may be processed by the electronic device or computer device in order to generate the virtual representation behaving corresponding to the physical input object which may be the user's hand observed by the touchless interaction system.

Sensor means, in a preferred embodiment, may include at least one 3D camera providing the point cloud and/or voxel cloud and may include at least one 2D color camera, in particular 2D RGB camera, for adding color information to the point cloud and/or voxel cloud.

Throughout the present disclosure, the term "display means" may refer to any device or component capable of visually presenting information, such as a monitor, screen, or projector. Specific examples may include LCD screens, LED displays, or holographic displays using eye tracking technology to provide a user with a 3D image.

Throughout the present disclosure, the term "user input system" may refer to any combination of hardware and software that allows a user to provide input to a computer device, including but not limited to above-mentioned touchless gesture input systems, voice input systems, keyboards, mice and/or the like.

Throughout the present disclosure, the term "touchless pointing gesture" may refer to a specific type of touchless gesture where a user points towards a target, in particular towards a content item, without physically touching the display means. Examples may include pointing a finger of a user's hand towards the display means. Further examples may include using an input object, such as a pen and/or the like to point towards the display means.

Throughout the present disclosure, the term "voice input system" may refer to a system capable of receiving and processing voice input, in particular in natural language, from a user. Examples may include microphones, voice recognition software, and other audio input devices.

Throughout the present disclosure, the term "voice input" may refer to any spoken command or verbal instruction provided by a user. Examples may include spoken words, phrases, or sentences.

It may be provided that the method further comprises generating one or more control commands based on the received voice input and the associated selected content item. It may be further provided that the one or more control commands are configured to cause the computer device to perform at least one action relating to the voice input and the selected content item.

Throughout the present disclosure, the term "control commands" may refer to instructions generated by the user input system, preferably by the touchless gesture input system, that direct the computer device to perform specific actions. Examples of control commands may include opening applications, navigating menus, or executing specific functions within software.

Throughout the present disclosure, the term "perform at least one action" may refer to the execution of a task or function by the computer device in response to a control command. Examples may include displaying information or more detailed information, modifying content, or initiating a process, e.g., a purchase process.

In the following, several examples are given:
In a first example, it may be intended to open a document. In particular: In a professional setting, a user may be working on a computer device and needs to open a specific document. The user points to the document icon on the display means using a touchless pointing gesture. The system detects this gesture and activates the voice input system. The user then says, "Open this document." The system receives the voice input and generates a control command based on the received voice input and the associated selected document icon. The computer device then opens the specified document, allowing the user to begin editing or reviewing it immediately.

In a second example, it may be intended to play a video. In particular: In a home entertainment scenario, a user may want to watch a video on a smart TV being, in this case, the computer device. The user points to a video thumbnail on the display means of the smart TV using a touchless pointing gesture. The system detects the gesture and activates the voice input system. The user then says, "Play this video." The system receives the voice input and generates a control command based on the received voice input and the associated selected video thumbnail. The smart TV then starts playing the selected video, providing a seamless and intuitive user experience.

In a third example, the user may intend to add an item to a shopping cart of an online shop. In particular: In an online shopping context, a user is browsing an e-commerce website on a tablet being, in this case, the computer device. The user points to a product image using a touchless pointing gesture. The system detects the gesture and activates the voice input system. The user then says, "Add this to my cart." The system receives the voice input and generates a control command based on the received voice input and the associated selected product image. The e-commerce application then adds the selected product to the user's shopping cart, making the shopping experience more efficient and user-friendly.

Advantageously, based on the generated control commands which were generated based on the received voice input and the associated selected content item, precise and context-specific actions can be performed, enhancing the accuracy and relevance of the computer device's response. Furter, the method may streamline the interaction process, as users can issue voice commands that directly trigger specific actions related to the selected content item, reducing the need for multiple steps.

Moreover, the method may improve the efficiency of the computer device by enabling quick execution of tasks based on user input, potentially reducing processing time and resource usage. In other words: by getting the information to which content item a specific voice command is directed, the computer device can process task more efficient.

Additionally, the method may enhance user satisfaction by providing immediate and relevant responses to voice commands, making the interaction with the computer device more responsive and engaging.

It may be provided that performing the at least one action comprises displaying, using the display means, one or more fine-tuned content items.

Throughout the present disclosure, the term "fine-tuned content items" may refer to content items that have been adjusted or refined based on specific criteria and/or user preferences. Examples may include personalized recommendations, filtered search results, or customized information displays.

In the following, several examples are given:
In a first example, displaying personalized news articles may be intended. In particular: A user may be browsing a news website on the computer device. The user points to a news category, such as "Technology," using a touchless pointing gesture. The system detects this gesture and activates the voice input system. The user then says, "Show me the latest articles." The system receives the voice input and generates control commands to display fine-tuned content items, such as personalized news articles related to technology. These articles are displayed on the display means, tailored to the user's interests and preferences.

In a second example, displaying recommended movies may be intended. In particular: A user may be using a streaming service on a smart TV being, in this case, the computer device. The user points to a genre, such as "Action," using a touchless pointing gesture. The system detects the gesture and activates the voice input system. The user then says, "Recommend some movies." The system receives the voice input and generates control commands to display fine-tuned content items, such as recommended action movies. These recommendations are displayed on the screen, customized based on the user's viewing history and preferences.

In a third example, displaying filtered search results may be intended. In particular, a user may be conducting a web search on the computer device. The user is faced with various search results and points to a particular search result using a touchless pointing gesture. The system detects the gesture and activates the voice input system. The user then says, "Conduct a further search based on this." The system receives the voice input and generates control commands to display fine-tuned search results. This process may be performed iteratively, multiple times in sequence.

In a fourth example, the user intends to select and buy a pair of shoes. In particular: A user may be browsing an online shoe store on their computer device, looking to buy a new pair of shoes. The user points to a particular pair of shoes using a touchless pointing gesture. The system detects this gesture and activates the voice input system. The user then says, "Show me shoes that match this style." or simply "This is nice, please show me similar alternatives." The system receives the voice input and generates control commands to display fine-tuned content items, such as personalized shoe recommendations.

Providing fine-tuned content items enhances the relevance of the information presented to the user, thereby improving the overall user experience. Further, the method may increase user engagement by presenting content that is specifically tailored to the user's interests or needs in an easy manner. Further, the method may reduce information overload by filtering out irrelevant content and focusing on what is most pertinent to the user. Thus, the method may improve the efficiency of content delivery, as users can quickly access the most relevant information without having to sift through extraneous data.

It may be provided that the computer-implemented method is performed multiple times, preferably in sequence and/or during the course of a web-browsing and/or web-searching session. In the course of performing the method a second time, it may be provided displaying one or more fine-tuned content items on a display means. It may be further provided second detecting, using the touchless gesture input system a second touchless pointing gesture of the user which indicates a selected fine-tuned content item of the displayed one or more fine-tuned content items. It may be further provided, in response to the second detecting, activating the voice input system. It may be further provided second receiving, using the voice input system, a second voice input. It may be further provided associating the second voice input to the selected fine-tuned content item. It may be further provided second generating one or more control commands based on the received second voice input and based on the associated selected fine-tuned content item, the one or more control commands being configured to cause the computer device to perform at least one second action relating to the second voice input and the selected fine-tuned content item. It may be further provided performing the at least one second action comprises displaying, using the display means, one or more further fine-tuned content items.

Throughout the present disclosure, the term "multiple times" may refer to the repetition of the method more than once. Examples may include performing the method several times in a single session or across multiple sessions.

Throughout the present disclosure, the term "sequence" may refer to performing the method iteratively, so based on a previous performance of the method.

Throughout the present disclosure, the term "web-browsing" may refer to the activity of navigating and viewing web pages on the internet. Examples may include using a web browser to access websites, read articles, or watch videos.

Throughout the present disclosure, the term "web-searching" may refer to the activity of using a search engine to find information on the internet. Examples may include entering search queries and reviewing search results, or online shopping.

Throughout the present disclosure, the term "second touchless pointing gesture" may refer to a subsequent touchless gesture made by the user to indicate a selection. Examples may include pointing to a new item after an initial selection.

Throughout the present disclosure, the term "second voice input" may refer to a subsequent voice command or instruction provided by the user. Examples may include giving a new command after an initial interaction.

Throughout the present disclosure, the term "second action" may refer to an additional task or function performed by the computer device in response to a second control command. Examples may include displaying new content, modifying existing content, or initiating a different process.

Throughout the present disclosure, the term "further fine-tuned content items" may refer to additional content items that have been further refined or adjusted based on the user's interactions. Examples may include more personalized recommendations or more specific search results.

Performing the method multiple times allows for continuous and dynamic interaction with the computer device, adapting to the user's ongoing needs and preferences. Further, the method may provide a more seamless and integrated user experience, as the device can respond to multiple inputs in a coherent and consistent manner. A further technical advantage may be that the method allows for iteratively enhancing the relevance and accuracy of the content presented to the user, as each iteration can refine and fine-tune the information based on previous interactions. Therefore, the efficiency of web-browsing and web-searching sessions may be improved, as users can quickly and easily navigate through content and find relevant information without repetitive manual inputs.

It may be provided that the voice input system is deactivated before activating.

Throughout the present disclosure, the term "deactivated" may refer to the state of a system or component being turned off or rendered inactive. Examples may include disabling a microphone, turning off voice recognition software, or putting a system into a standby mode.

One technical advantage of deactivating the voice input system before activating it may be that it conserves power and system resources, as the voice input system is only active when needed. Another technical advantage may be that it reduces the risk of unintended voice inputs being received and processed, thereby increasing the accuracy and reliability of the system. A further technical advantage may be that the method may enhance user privacy, as the voice input system is not continuously active and listening for inputs, reducing the potential for unauthorized or accidental recordings. Additionally, the method may improve system performance by minimizing the load on the device's processing capabilities, as the voice input system is only activated during specific interactions. Moreover, the method may provide a more controlled and secure interaction environment, as the activation and deactivation of the voice input system can be managed based on specific triggers or user actions, ensuring that the system is only active when necessary.

It may be provided that after activating the voice input system, the voice input system remains activated until determining a deactivation condition causing the computer device to deactivate the voice input system.

It may be further provided that the deactivation condition comprises one or more of the following:
lapse of a predetermined time period;
termination of the user's touchless pointing gesture, in particular, upon determining removing a hand and/or finger from a position where the touchless pointing gesture is detected;
determining removing is not performed within a threshold of tolerance, preferably including a spatial tolerance area;
receiving of an instruction from the user indicating that the voice input is completed.

Throughout the present disclosure, the term "deactivation condition" may refer to specific criteria or events that trigger the deactivation of a system or component. Examples may include time-based conditions, user actions, or specific commands.

Throughout the present disclosure, the term "predetermined time period" may refer to a set duration of time that is defined in advance. Examples may include a few seconds, minutes, or any other fixed interval.

Throughout the present disclosure, the term "termination of the user's touchless pointing gesture" may refer to the end or cessation of a touchless gesture made by the user. Examples may include the user moving their hand away from the detection area or stopping a pointing action.

Throughout the present disclosure, the term "threshold of tolerance" may refer to an allowable range or limit within which certain actions or conditions are considered acceptable. Examples may include spatial tolerance areas where minor movements are ignored.

Throughout the present disclosure, the term "spatial tolerance area" may refer to a defined physical space within which movements are considered part of the same gesture. Examples may include a small area around the initial pointing position.

Throughout the present disclosure, the term "instruction from the user" may refer to a command or signal given by the user to indicate a specific action. Examples may include verbal commands, gestures, or other input methods.

One technical advantage of keeping the voice input system activated until determining a deactivation condition may be that it allows for continuous and uninterrupted voice input, enhancing the fluidity of user interactions. Further, it may be provided more flexibility in deactivation, as multiple conditions can be used to determine when to deactivate the voice input system, accommodating different user behaviors and preferences. Further, the method advantageously may prevent premature deactivation of the voice input system, ensuring that all necessary voice inputs are received and processed before deactivation occurs. Additionally, the method may improve user convenience by allowing the voice input system to remain active for a predetermined time period or until specific actions are detected, reducing the need for repeated activations. Further, the method may enhance the accuracy and reliability of the voice input system by using specific deactivation conditions, such as the termination of touchless gestures or user instructions, ensuring that the system deactivates only when appropriate.

It may be provided that a deactivation is prevented if the voice input system determines that the user continues to provide voice input.

Throughout the present disclosure, the term "continues to provide voice input" may refer to the user actively speaking or issuing voice commands essentially without interruption. Examples may include ongoing verbal instructions, continuous speech, or successive voice commands.

Preventing deactivation if the user continues to provide voice input advantageously ensures uninterrupted and seamless voice interaction, allowing users to complete their commands without the system shutting off prematurely. Further, this may improve the accuracy and completeness of voice command processing, as the system remains active to capture the entire input sequence without missing any part of the user's instructions. Thereby, the method may reduce user frustration by eliminating the need to reactivate the voice input system repeatedly, thereby streamlining the interaction process and making it more efficient. At the same time, the method may increase the reliability of the voice input system by ensuring that it only deactivates when the user has finished providing input, thereby reducing the likelihood of errors or incomplete commands being processed.

It may be provided that, if it is determined that the deactivation condition occurs, the voice input system remains activated for a tolerance period of time that may be predetermined and/or adjustable by the user.

Throughout the present disclosure, the term "tolerance period of time" may refer to an additional duration during which the voice input system remains active after a deactivation condition is met. Examples may include a few seconds or minutes to allow for any final inputs or adjustments.

Throughout the present disclosure, the term "predetermined" may refer to a value or setting that is defined in advance. Examples may include fixed time intervals set by the system or developer.

Throughout the present disclosure, the term "adjustable by the user" may refer to settings or parameters that can be modified or customized by the user according to their preferences. Examples may include user-configurable time periods or thresholds.

Keeping the voice input system activated for a tolerance period of time after a deactivation condition occurs may provide a comfortable buffer period for the user to complete any final voice inputs, ensuring that no commands are cut off prematurely. The option to adjust the tolerance period may enhance adaptability of the method. For example, an unexperienced user can set the tolerance period high and upon gaining more experience, the tolerance level may be reduced gradually. Additionally, the likelihood of user frustration is reduced by providing a grace period during which the system remains active, allowing users to correct or add to their inputs without needing to reactivate the system.

The method may comprise providing, preferably displaying using the display means, a user-perceivable indication upon activation of the voice input system, wherein the user-perceivable indication indicates to the user that the voice input system is activated.

It may be further provided that the user-perceivable indication includes one or more of the following:
a sound signal provided by a sound output means;
a light signal, preferably provided by the display means;
a symbol displayed by the display means, wherein the symbol may be arranged adjacent to a virtual pointer displayed by the display means based on touchless user input received by the touchless gesture input system, and/or may be arranged as an overlaying symbol on the virtual pointer, and/or may be arranged as an element that at least partially surrounds the virtual pointer;
a change of a color and/or a shape of the virtual pointer;
an information about a remaining time period in which the voice input system remains activated.

Throughout the present disclosure, the term "user-perceivable indication" may refer to any signal or notification that can be detected and recognized by the user. Examples may include visual cues, auditory signals, or tactile feedback.

Throughout the present disclosure, the term "sound signal" may refer to an audible alert or notification generated by a device. Examples may include beeps, tones, or spoken messages.

Throughout the present disclosure, the term "light signal" may refer to a visual alert or notification generated by a device. Examples may include flashing lights, colored indicators, or illuminated symbols.

Throughout the present disclosure, the term "symbol" may refer to a graphical representation, icon and/or element displayed on a display means.

Throughout the present disclosure, the term "virtual pointer" may refer to a graphical element displayed by the display means that represents the position of a user's input, in particular a user's touchless pointing gesture. This may be, e.g., a mouse cursor or pointer, a touch input indicator such as a colored dot which may have a tranparency, and/or the like.

Throughout the present disclosure, the term "remaining time period" may refer to the duration of time left before a specific event occurs, such as the deactivation of the voice input system. It may be provided that, for displaying the remaining time period to the user, the user-perceivable indication is a timer and/or the like.

One technical advantage of providing a user-perceivable indication upon activation of the voice input system may be that it enhances user awareness and confidence, ensuring that users know when the system is ready to receive voice inputs. Another technical advantage may be that the method may improve the usability and accessibility of the voice input system by providing clear and immediate feedback to the user, reducing confusion and errors. Additionally, the method may enhance the overall user experience by integrating the indication with the virtual pointer, making it easier for users to see and understand the status of the voice input system in real-time. Moreover, the method may provide valuable information about the remaining time period in which the voice input system remains activated, allowing users to manage their inputs more effectively and avoid unexpected deactivations.

It may be provided that the touchless pointing gesture of the user indicates the selected content item based on one or more of:
a detected pointing direction of a user's finger performing the touchless pointing gesture;
a duration of pointing to the selected content item;
a distance between the user's finger performing the touchless pointing gesture and the display means, in particular in an orthogonal direction towards the display means.

Throughout the present disclosure, the term "detected pointing direction" may refer to the orientation and/or angle at which a user's finger is directed during a touchless pointing gesture. This may be, for example, angle of the finger relative to the display means surface.

Throughout the present disclosure, the term "duration of pointing" may refer to the length of time a user's finger remains directed at a selected content item during a touchless pointing gesture. Examples may include holding a finger steady on a target for a few seconds.

Throughout the present disclosure, the term "distance" may refer to the spatial separation between the user's finger and the display means. Examples may include the measurement of how far the finger is from the screen, particularly in an orthogonal direction.

Determining the selected content item based on the detected pointing direction of a user's finger allows for precise and accurate selection of items, enhancing the reliability of the touchless gesture input system.

It may be provided that the voice input is received at least partially in natural language, optionally, by means of a natural language processing unit of the computer device, preferably including a microphone and/or a keyboard.

Receiving the voice input at least partially in natural language may allows for more intuitive and user-friendly interactions, as users can speak naturally without needing to learn specific commands or syntax.

The method may comprise, prior to the displaying of the one or more content items and prior to the detecting of the touchless pointing gesture, receiving an initial user input from the user comprising a content request. The initial user input may be a voice input that may be received by the voice input system. It may be further provided displaying, using the display means, the one or more content items based on the content request.

Throughout the present disclosure, the term "initial user input" may refer to an upstream input provided by the user to initiate the intended interaction with the computer device.

Throughout the present disclosure, the term "content request" may refer to a user-initiated query or command requesting specific content or information. Examples may include asking for search results, requesting a video, or seeking information on a particular topic.

It may be provided that the voice input is processed by a machine-learning model, preferably comprising a large language model. It may be further provided that the machine-learning model runs locally on the computer device.

Throughout the present disclosure, the term "runs locally" may refer to the execution of the machine-learning model directly on the computer device, without relying on external servers or cloud-based resources. This may involve utilizing the computer device's own processing power, memory, and storage to perform the necessary computations.

Throughout the present disclosure, the term "machine-learning model" may refer to a computational model that uses algorithms and statistical techniques to learn patterns from data and make predictions or decisions. Examples may include neural networks, decision trees, support vector machines, GPT models, large language models and/or the like.

One technical advantage of running the machine-learning model locally on the computer device may be that it reduces latency, as data does not need to be transmitted to and from external servers, resulting in faster processing and response times. Another technical advantage may be that running the model locally enhances data privacy and security, as sensitive data remains on the computer device and is not exposed to potential risks associated with external data transmission. A further technical advantage may be that the method provides greater control over the machine-learning model, allowing for customization and optimization based on the specific capabilities and requirements of the computer device. Additionally, running the machine-learning model locally may reduce dependency on internet connectivity, ensuring that the system can function effectively even in offline or low-connectivity environments. Moreover, the method may improve the efficiency and performance of the computer device, as local execution can leverage the full computational resources of the device without the overhead of network communication. The method may also enhance user confidence and trust in the system, as users can be assured that their data and computations are handled securely and privately on their own device. Furthermore, running the machine-learning model locally may facilitate real-time processing and decision-making, enabling the computer device to respond quickly and accurately to user input and environmental changes. The method may also provide a layer of redundancy, ensuring that the machine-learning capabilities remain available even if external servers or cloud services are temporarily unavailable.

Throughout the present disclosure, the term "large language model" may refer to a type of machine-learning model that is trained on vast amounts of text data to understand and generate human language. Examples may include models like GPT-4, BERT and/or other advanced natural language processing models.

According to a second aspect of the present invention, it may be provided a data processing apparatus. The data processing apparatus may be an electronic device, more preferably a computer device, more preferably a laptop device. The data processing apparatus may comprise means for carrying out the method according to the first aspect of the present invention. If the data processing apparatus is a laptop device, it comprises a base portion and a top portion being, preferably hingedly, connected to each other.

Throughout the present disclosure, the term "laptop device" may refer to a portable computer that typically includes a screen and a keyboard integrated into a single unit. Examples of laptop devices may include notebooks, ultrabooks, and convertible laptops. Throughout the present disclosure, the term "base portion" may refer to the lower part of a laptop device that typically contains the keyboard, touchpad, and internal components such as the motherboard and storage devices. Throughout the present disclosure, the term "top portion" may refer to the upper part of a laptop device that typically contains the display screen.

Throughout the present disclosure, the term "hingedly connected" may refer to a connection mechanism that allows the top portion and base portion of a laptop device to pivot relative to each other, enabling the device to open and close like a clamshell. Examples of hingedly connected mechanisms may include traditional laptop hinges, 360-degree hinges for convertible laptops, and detachable hinges for hybrid devices.

According to a third aspect of the present invention, it may be provided a computer program or a computer-readable medium having stored thereon a computer program, the computer program comprising instructions which, when the program is executed by a data processing apparatus, preferably according to the second aspect of the present invention, cause the data processing apparatus to carry out the method according to the first aspect of the present invention.

All features, technical implementation details and advantages described with respect to any one of the aspects of the present invention described herein are self-evidently mutatis mutandis applicable for any one of the other aspects of the present invention and vice versa.

As a general overview, certain aspects of the present disclosure provide an entirely new human-machine interface which follows a revolutionary new interaction paradigm. The interaction paradigm is built on the principle of automation of tasks, wherein, e.g., training the needed steps for performing or completing the task may involve the new interaction paradigm which is further disclosed in European patent application no. 23200379.8 titled "IMPROVEMENTS IN CONTENT INTERACTION ON A COMPUTING DIVICE", the contents of which are incorporated herein by reference.

An excerpt of European patent application no. 23200379.8 is given in the following, including main aspects of the new interaction paradigm which essentially includes:
1. "Tell what you want" (also referred to as a content request), which allows users to communicate with their computer devices in the most intuitive way, namely by merely stating their desires.
2. "Select from proposed options" (also referred to as one or more content options), where the system responds with intelligent suggestions, simplifying the user's decision-making process and streamlining the journey to desired information or content.
3. "Fine tune", where the system gets more details about the task, e.g., including the particular steps and/or sequence of steps.
4. "Interact with the result" (also referred to as a content item), where the user engages with the resulting content item using the full spectrum of human expression, potentially including gestures (both touch-based and touchless), voice, and more. The result may be a task automation template or, when performing the task at a later point in time, the result may be the output of performing or completing the task.

This innovative approach transcends conventional user experiences. It not only enhances user satisfaction but fundamentally transforms the way humans connect with the digital world. Information retrieval becomes a fluid, personalized, and dynamic process, fostering creativity and efficiency. Importantly, aspects of the present disclosure empower users to harness their most instinctive and natural behaviors when engaging with computer devices.

With this paradigm shift, the true potential of human-computer interaction is unlocked, bridging the divide between technology and human intuition. This way, one overall objective of the present disclosure is to pave the way to a future where the computer understands its user as effortlessly as a trusted companion and where technology harmonizes seamlessly with the user's innate abilities.

The user interaction, e.g., for creating the task automation template, may include a step of receiving a first user input from a user. The first user input may comprise a content request. The method may comprise a step of providing one or more content options associated with the content request to the user. The method may comprise a step of receiving a second user input from the user. The second user input may indicate a selection from the one or more content options. The method may comprise a step of providing a content item associated with the selected content option on a display of the data processing apparatus. The method may comprise a step of receiving a third user input from the user. The third user input may cause an interaction with the content item on the display. The method may comprise, prior to the receiving of the first user input: displaying a window on the display including a natural language text input field. The window may include an avatar configured to move and/or behave essentially naturally, i.e., mimicking a human, optionally the avatar asking the user to provide the first user input. Further, the method may comprise providing one or more options of entering the first user input, including text format by typing and/or entering voice commands, preferably triggered by pressing and holding a button, in particular a touch button on the touchscreen as described in more detail below. The step of receiving may be performed in accordance with a selected one of the one or more options of entering first user input. The method may comprise, optionally, after receiving the first user input: output, preferably in text or audio format, the first user input as it was understood by the system. to the user. The user may confirm by pressing a button or providing voice input indicating a confirmation. The method may comprise disappearing of the window in response to the receiving. Further, the method may comprise re-appearing of the window after the system is ready for performing the step or providing the one or more content options. The step of providing one or more content options may accordingly be performed thereafter.

Providing one or more content options may involve providing 3 or less, or 2 or less content options. It was found that too many content options confuse users. An optimum number of content options may be 3.

The method may comprise, after the providing of one or more content options: providing, preferably displaying, the one or more content options on a touchscreen, preferably the touchscreen being separate from the display, more particularly a touchscreen arranged on a user-facing surface of a base housing of the data processing apparatus when the data processing apparatus is a portable computer.

The method may comprise: outputting, preferably displaying, to the user a flowchart diagram of the steps that were performed by the system, optionally including information about the applications and/or data files used. The data files may be data files stored on the computer device and/or stored in a cloud storage and/or stored on a external storage which is communicatively connected or coupled to the computer device. Applications and data files may be displayed separately, in particular in visually distinct areas of the display means. The flowchart diagram may be displayed separately from the used applications and/or data files, in particular in a visually distinct area of the display means

Looking first at the "Tell what you want" part of the new interaction paradigm, the content request may be in natural language. Accordingly, users are allowed to express their intent, i.e., a content request, completely naturally and/or in a conversational manner. This aspect provides various advantages. First of all, it improves user engagement and reduces the learning curve for interacting with the computer system. The user is no longer forced to learn and use machine-acceptable interactions forms, such as using specific pre-defined commands, nor is the user forced to use the data processing apparatus essentially like a typewriter anymore. Since, users do not need to learn complex commands, this reduces the cognitive load. It also accommodates users with varying levels of technical expertise and those with physical disabilities, making the interaction more inclusive.

Turning to the "Select from proposed options" part of the new interaction paradigm, the step of receiving a second user input from the user to indicate a selection from the one or more content options has its own unique advantages. One of these advantages is efficient information retrieval, since by providing users with contextually relevant options, the system significantly accelerates the process of finding desired information, reducing search times and frustration. Furthermore, in terms of personalization, the system can adapt to individual preferences and behaviors, offering suggestions tailored to each user's specific needs and interests. It also minimizes the risk of misunderstandings or misinterpretations by presenting curated options related to the user's content request.

Further turning to the "fine tuning" part of the new interaction paradigm, the user is facilitated to provide additional user input and/or information in order to clarify the task.

Further turning to the "Interact with the result" part of the new interaction paradigm, the step of receiving a third user input to cause an interaction with the content item on the display also has its own unique advantages. First of all, it provides a particularly seamless transition, since users can seamlessly transition from expressing their content request to interacting with the resulting content, reducing friction in the interaction process. It also facilitates customized interaction, as users can engage in various ways with the content, such as reading, editing, playing, sharing, or taking further actions, making the interaction highly adaptable to different scenarios. By providing users with the content they desired and enabling immediate interaction, this step also leads to increased user satisfaction.

Overall, the new interaction paradigm also leads to a demonstrable reduction in the time required to perform specific tasks or retrieve information from a computer system. For instance, if user requests are processed more efficiently, leading to faster responses, this results in a reduction in processing time. The new interaction paradigm also optimizes the allocation of computational resources within the computer system. For example, by better predicting user intent and delivering relevant content options, it reduces unnecessary data processing and thereby conserves system resources. The new interaction paradigm also allows the computer system to handle a higher volume of user interactions or requests simultaneously, leading to an increased throughput.

### BRIEF DESCRIPTION OF THE DRAWINGS

The disclosure may be better understood by reference to the following drawings:
- Fig. 1:: An exemplary flowchart of a method in accordance with embodiments of the present disclosure.
- Fig. 2:: A perspective view of a computer device in accordance with embodiments of the present disclosure.
- Fig. 3:: A first exemplary scene showing content items in accordance with embodiments of the present disclosure.
- Fig. 4:: A second exemplary scene showing content items in accordance with embodiments of the present disclosure.
- Fig. 5:: A third exemplary scene showing content items in accordance with embodiments of the present disclosure.

### DETAILED DESCRIPTION

In the following, representative embodiments illustrated in the accompanying drawings will be explained. It should be understood that the illustrated embodiments and the following descriptions refer to examples which are not intended to limit the embodiments to one preferred embodiment.

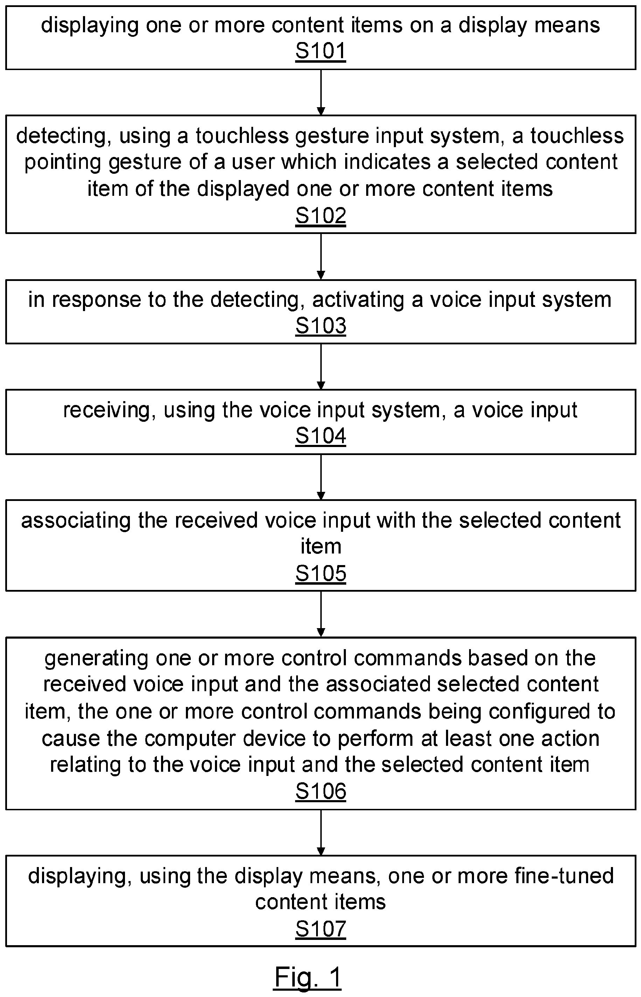

Figure 1 shows a flowchart in accordance with embodiments of the present disclosure. The flowchart includes several steps S101-S107. S101 includes displaying one or more content items A, B, C on a display means 108. Step S102 includes detecting, using a touchless gesture input system 110, a touchless pointing gesture of a user which indicates a selected content item A of the displayed one or more content items A, B, C. Step S103 includes, in response to the detecting, activating a voice input system 112. Step S104 includes receiving, using the voice input system 112, a voice input. Step S105 includes associating the received voice input with the selected content item A. Step S106 includes generating one or more control commands based on the received voice input and the associated selected content item A, the one or more control commands being configured to cause the computer device 100 to perform at least one action relating to the voice input and the selected content item A. Step S107 includes displaying, using the display means 108, one or more fine-tuned content items A, A*, A**.

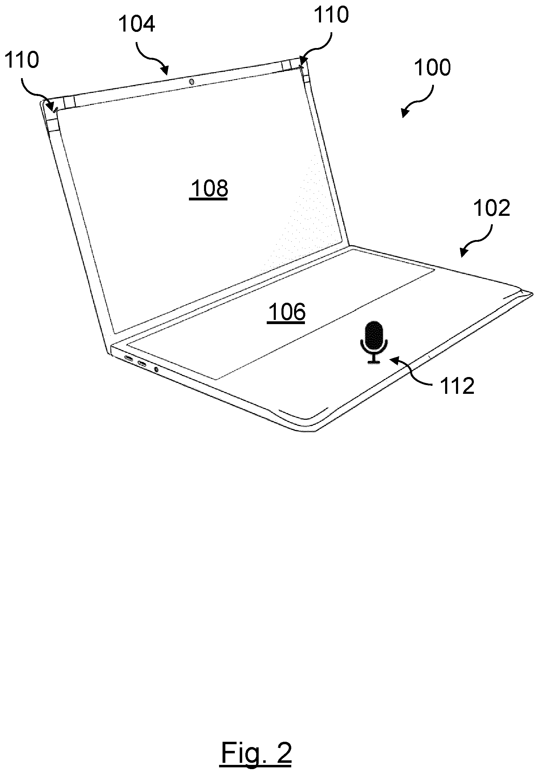

Figure 2 illustrates a perspective view of a computer device 100 in accordance with embodiments of the present disclosure. In the illustrated example, the computer device 100 is shown as a portable computer, i.e., laptop computer. It comprises a base portion 102 and a top portion 104. The portable computer is open, thereby revealing respective user-facing surfaces of the base portion 102 and top portion 104. A display means 108 is arranged on the user-facing surface of the top portion 104. A touch-sensitive control surface 106 being a second display means is arranged on the user-facing surface of the base portion 102. The portable computer comprises a touchless gesture input system 110, which comprises in the illustrated embodiment sensor means which are arranged at or near opposing upper corners of the top portion 104. However, the touchless gesture input system 110 may comprise other sensor arrangements. The computer device 100 further comprises a voice input system 112.

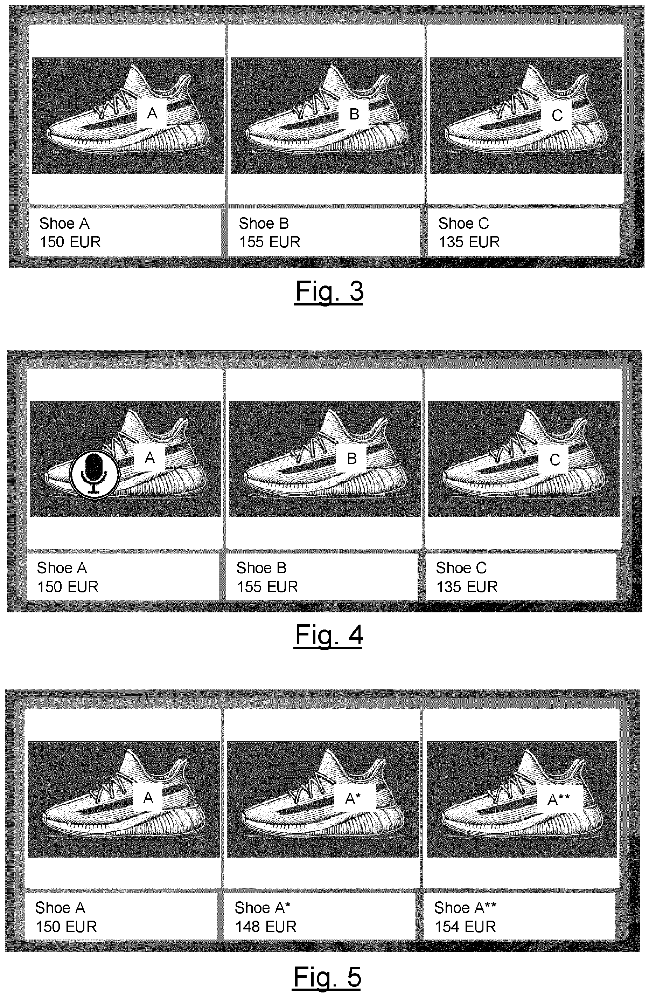

Figure 3 shows an exemplary scene including three alternative content items A, B and C, each being a shoe while the user intends to buy a pair of shoes, i.e., the user is searching the web for a pair of shoes to buy. To this end, the user can move a virtual pointer on the display using a touchless pointing gesture, wherein such a virtual pointer may be displayed in any suitable form such as a mouse pointer, crosshair cursor, or the like (not shown in figure 3). In the scenario shown in figure 4, the user has performed the touchless pointing gesture towards content item A, i.e., shoe A, for a predetermined time. In other words, the user has hovered over content item A for a predetermined time. In response, the virtual pointer changes its shape to a microphone, indicating that the voice input system 112 is now activated. In alternative embodiments, other shapes or visual cues might be used instead of a microphone symbol, as long as the user is informed about the opportunity to input a voice command. The user may now provide voice input, in particular in natural language. For example, the user may say "This shoe is nice, please show me similar alternatives", "I like the color but not the shape", "show me different brands", or the like.

Figure 5 shows the result of performing a respective action by the computer device 100 based on the touchless pointing gesture and the voice input "This shoe is nice, please show me similar alternatives": The computer device 100 searches the web for alternative shoes that are similar to A. Then, shoes A, A* and A** are shown to the user. The user may iteratively continue this process. At a certain point, the user may decide to buy one of the shoes. For this purpose, the user may provide, again, a touchless pointing gesture towards the respectively selected shoe causing activation of the voice input system 112. The user may then say "Please add this shoe to my shopping cart and start the payment process." The computer device 100 may operate accordingly, adding the shoe to the shopping cart and starting the payment process.

Notably, in the illustrated embodiment the user has not pushed any physical control element, such as a button (or even a virtual control element) to switch between the different input modalities such as gesture control and voice control. Rather, the interaction is completely seamless, naturally intuitive, and particularly efficient.

Certain embodiments of the invention may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g., sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g., a classification algorithm, a regression algorithm or a similarity learning algorithm). Classification algorithms may be used when the outputs are restricted to a limited set of values (categorical variables), i.e., the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters. Reinforcement learning is a third group of machine-learning algorithms that may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e., outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g., a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g., based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e., support vector networks) are supervised learning models with associated learning algorithms that may be used to analyze data (e.g., in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the present disclosure may be implemented on a computer system. The computer system may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the present disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the present disclosure comprise a data carrier having electronically readable control signals, which are capable of cooperating with a programmable computer system, such that one of the methods described herein is performed.

Generally, embodiments of the present disclosure can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present disclosure is, therefore, a computer program having a program code for performing one of the methods described herein, when the computer program runs on a computer.

A further embodiment of the present disclosure is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitory. A further embodiment of the present disclosure is an apparatus as described herein comprising a processor and the storage medium.

A further embodiment of the present disclosure is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein. A further embodiment comprises a computer having installed thereon the computer program for performing one of the methods described herein.

A further embodiment according to the present disclosure comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## Claims

1. A computer-implemented touchless gesture interaction method for controlling a computer device (100), the method comprising:
displaying one or more content items (A, B, C) on a display means (108);
detecting, using a touchless gesture input system (110), a touchless pointing gesture of a user which indicates a selected content item (A) of the displayed one or more content items (A, B, C);
in response to the detecting, activating a voice input system (112);
receiving, using the voice input system (112), a voice input; and
associating the received voice input with the selected content item (A).

2. The computer-implemented method of claim 1, further comprising:
generating one or more control commands based on the received voice input and the associated selected content item (A), the one or more control commands being configured to cause the computer device (100) to perform at least one action relating to the voice input and the selected content item (A).

3. The computer-implemented method of claim 2, wherein performing the at least one action comprises:
displaying, using the display means (108), one or more fine-tuned content items (A, A*, A**).

4. The computer-implemented method of any one of the preceding claims, wherein the method is performed multiple times, preferably in sequence and/or during the course of a web-browsing and/or web-searching session, optionally wherein a second time of performing the method comprises:
displaying one or more fine-tuned content items (A, A*, A**) on a display means (108);
second detecting, using the touchless gesture input system (110) a second touchless pointing gesture of the user which indicates a selected fine-tuned content item of the displayed one or more fine-tuned content items (A, A*, A**);
in response to the second detecting, activating the voice input system (112);
second receiving, using the voice input system (112), a second voice input; and
associating the second voice input to the selected fine-tuned content item;
further optionally, second generating one or more control commands based on the received second voice input and based on the associated selected fine-tuned content item, the one or more control commands being configured to cause the computer device (100) to perform at least one second action relating to the second voice input and the selected fine-tuned content item;
further optionally, performing the at least one second action comprises:
displaying, using the display means (108), one or more further fine-tuned content items.

5. The computer-implemented method of any one of the preceding claims, wherein the voice input system (112) is deactivated before activating.

6. The computer-implemented method of any one of the preceding claims, wherein after activating the voice input system (112), the voice input system (112) remains activated until determining a deactivation condition causing the computer device (100) to deactivate the voice input system (112), wherein the deactivation condition comprises one or more of the following:
lapse of a predetermined time period;
termination of the user's touchless pointing gesture, in particular, upon determining removing a hand and/or finger from a position where the touchless pointing gesture is detected, optionally wherein determining removing is not performed within a threshold of tolerance, preferably including a spatial tolerance area;
receiving of an instruction from the user indicating that the voice input is completed.

7. The computer-implemented method of claim 6, wherein a deactivation is prevented if the voice input system (112) determines that the user continues to provide voice input

8. The computer-implemented method of any one of claims 6 or 7, wherein if it is determined that the deactivation condition occurs, the voice input system (112) remains activated for a tolerance period of time that may be predetermined and/or adjustable by the user.

9. The computer-implemented method of any one of the preceding claims, further comprising:
providing, preferably displaying using the display means (108), a user-perceivable indication upon activation of the voice input system (112), wherein the user-perceivable indication indicates to the user that the voice input system (112) is activated;
wherein, optinally, the user-perceivable indication includes one or more of the following:
a sound signal provided by a sound output means;
a light signal, preferably provided by the display means (108);
a symbol displayed by the display means (108), wherein, optionally, the symbol is:
arranged adjacent to a virtual pointer displayed by the display means (108) based on touchless user input received by the touchless gesture input system (110), and/or
arranged as an overlaying symbol on the virtual pointer,
arranged as an element that at least partially surrounds the virtual pointer;
a change of a color and/or a shape of the virtual pointer;
an information about a remaining time period in which the voice input system (112) remains activated.

10. The computer-implemented method of any one of the preceding claims, wherein the touchless pointing gesture of the user indicates the selected content item (A) based on one or more of:
a detected pointing direction of a user's finger performing the touchless pointing gesture;
a duration of pointing to the selected content item (A);
a distance between the user's finger performing the touchless pointing gesture and the display means (108), in particular in an orthogonal direction towards the display means (108).

11. The computer-implemented method of any one of the preceding claims, wherein the voice input is received at least partially in natural language, optionally, by means of a natural language processing unit of the computer device (100), preferably including a microphone and/or a keyboard.

12. The computer-implemented method of any one of the preceding claims, further comprising, prior to the displaying of the one or more content items (A, B, C) and prior to the detecting of the touchless pointing gesture:
receiving an initial user input from the user comprising a content request, preferably as an initial voice input received by the voice input system (112);
displaying, using the display means (108), the one or more content items (A, B, C) based on the content request.

13. The computer-implemented method of any one of the preceding claims, wherein the voice input is processed by a machine-learning model, preferably comprising a large language model;
wherein, optionally, the machine-learning model runs locally on the computer device (100).

14. A data processing apparatus, preferably an electronic device, more preferably a computer device (100), more preferably a laptop device, comprising means for carrying out the method of any one of claims 1-13, wherein if the data processing apparatus is a laptop device, it comprises a base portion (102) and a top portion (104) being, preferably hingedly, connected to each other.

15. A computer program or a computer-readable medium having stored thereon a computer program, the computer program comprising instructions which, when the program is executed by a computer, preferably according to claim 14, cause the computer to carry out the method of any one of claims 1-13.
